# EUROPÄISCHE PATENTSCHRIFT

(11) **EP 2 121 410 B1**
(45) Veröffentlichungstag und Bekanntmachung des Hinweises auf die Patenterteilung: **25.07.2012**
(21) Anmeldenummer: 08707038.9
(22) Anmeldetag: 15.01.2008
(51) Int. Cl.: B61L 27/00, H04W 4/18, B61L 3/00

(54) **VERFAHREN UND SYSTEM ZUM DATENAUSTAUSCH ZWISCHEN EINER ZENTRALEN EINHEIT UND EINER ZUGBEEINFLUSSUNGSKOMPONENTE**
METHOD AND SYSTEM FOR THE DATA EXCHANGE BETWEEN A CENTRAL UNIT AND A TRAIN INFLUENCING COMPONENT
PROCÉDÉ ET SYSTÈME POUR UN ÉCHANGE DE DONNÉES ENTRE UNE UNITÉ CENTRALE ET UN COMPOSANT DE COMMANDE DE TRAIN

(30) Priorität: 25.01.2007 EP 07001605
(43) Veröffentlichungstag der Anmeldung: 25.11.2009
(73) Patentinhaber: Siemens Schweiz AG, 8047 Zürich (CH)
(72) Erfinder: SCHMID, Rolf, CH-8712 Stäfa (CH)
(74) Vertreter: Fischer, Michael
(86) Internationale Anmeldenummer: PCT/EP2008/000234
(87) Internationale Veröffentlichungsnummer: WO 2008/089896

(56) Entgegenhaltungen:
- EP-A- 0 735 788
- US-A1- 2004 179 513
- "ISDN für den Transrapid" IKON NEWS, [Online] September 1999 (1999-09), XP002437697 Gefunden im Internet: URL:http://www.ikon-gmbh.de/index.htm?../f r_inhalt/news/artikel/archiv/artikel_syste me_transrapid.htm> [gefunden am 1999-09]

## Beschreibung

Die vorliegende Erfindung betrifft ein Verfahren und ein System zum Datenaustausch zwischen einer zentralen Einheit und einer Zugbeeinflussungskomponente nach dem Oberbegriff des Patentanspruchs 1 bzw. 7.

Auf dem Gebiet des schienengebundenen Verkehrs werden moderne Zugsicherungssysteme eingesetzt, mit denen zentral erstellte Daten zur Steuerung des Zugverkehrs an dezentrale Einheiten übertragen werden respektive von diesen dezentralen Einheiten angefordert und zentral verarbeitet werden. Typische Einheiten für die zentrale Datenerstellung und -anforderung sind Stellwerke und Leitstellen. Für die dezentralen Einheiten können beispielhaft gleisseitig angeordnete Kontrolleinheiten, wie Einrichtungen zur Signal- und Weichensteuerung/-überwachung, Einrichtungen zur Steuerung und Überwachung von Gleisfreimeldeeinrichtungen, Balisen, Linienleitern und Loop-Kabeln genannt werden. Selbst die modernen Zugsicherungssysteme sind jedoch auch heute noch aufgrund der nationalen Aufstellung der Bahnunternehmungen, wie Schweizerische Bundesbahnen SBB, Österreichische Bundesbahnen ÖBB, Deutsche Bahn DB, nationale Zugsicherungssysteme, die beim Übertritt von Land zu Land fahrzeugseitig gewechselt werden müssen, was auf den Fahrzeugen einen erheblichen Aufwand hinsichtlich des Einsatzes im grenzüberschreitenden Verkehr bedeutet.

Aus diesem Grunde hat beispielsweise die Europäische Union beschlossen, ein europaweit einheitliches Zugsicherungssystem einzuführen, das unter dem Namen ETCS (European Train Control System) in der Fachwelt bekannt ist. Dieses Zugsicherungssystem verfügt über drei verschiedene Level, die sich in der Art der Kommunikation von Zug und Leitstelle und der Ortung von Zügen unterscheiden. Im ETCS Level 1 werden die zuglenkenden Informationen von Transparent- und Fix-Balisen und/oder Linienleitern und/oder Loop-Kabeln auf den Führerstand übertragen und beinhalten u.a. Anweisungen zur Geschwindigkeitssteuerung und Überwachung des Zuges. Im Level 2 werden die zuglenkenden Informationen über ein Mobilfunknetz aus sogenannten Radio Block Centern auf den Führerstand übertragen und im Level 3 kommt dann noch die Integritätsprüfung sowie Eigenortung des Zuges mittels Navigationssystem, wie GPS oder Galilei (aktuell im Aufbau) zum Einsatz.

Besonders die Umrüstung des Bahnstrecken hinsichtlich der Balisen stellt für die Bahnunternehmen einen erheblichen Investitionsaufwand in ihre Infrastruktur dar. Besonders der Einsatz der hierzu erforderlichen Spezialkabel (Schnittstelle "C" gemäß SUBSET 36 der ETCS-Spezifikation) ist vergleichsweise teuer und aufwendig. Weiter ist nach der Installation einer Balisen ihre korrekte Funktion zu testen. Eine Abnahme der Streckenpunkte wird dabei heute in etwa so durchgeführt: Die Benutzung der heute etablierten unidirektionalen Datenschnittstelle "C" ermöglicht eine maximale Stelldistanz von 3 km mit einem Spezialkabel (ca. 3€/m). Die Abnahme des Streckenpunktes muss relativ aufwendig vor Ort durchgeführt werden, was zudem eine Sperrung der Strecke erfordert, damit das Auslesen der Projektierungsdaten pro Signalbegriff an der Luftschnittstelle des Streckenpunktes mit einem Programmier- und Diagnosetool nicht unter rollendem Rad mit der damit verbundenen Personengefährdung vorgenommen werden muss. Es wird dabei pro Signalbegriff, der von Stellwerk individuell angefordert werden muss, der zugehörige MD4-Codes an dem Tool erfasst. Nach der Erfassung aller MD4-Codes für den Streckenpunkt müssen die erfassten MD4-Codes noch mit den Projektierungsdaten im Büro unabhängig verglichen werden.

Ein derartiges Verfahren und ein derartiges System sind beispielsweise aus der europäischen Patentanmeldung EP 0 735 788 A2 bekannt.

Diese vorstehend beschriebene Vorgehensweise ist daher kostspielig und muss bei jeder Änderung des Streckenpunktes wiederholt werden. Eine Fehleroffenbarung des Streckenpunktes kann in diesem System nur durch die Fahrzeuge durchgeführt werden. Ein solches System besteht heute noch nicht.

Der vorliegenden Erfindung liegt daher die Aufgabe zugrunde, ein Verfahren und System zur Zugsicherung anzugeben, welche den Aufwand, der mit dem Einsatz von Balisen im Zusammenhang mit der Einrichtung von ETCS verbunden ist, erheblich vereinfachen und es erlauben, eine preiswertere Anbindung der Balisen an zentrale Einheiten, wie Stellwerke und Leitstellen, auch in weniger dicht besiedelten Gebieten, zu ermöglichen.

Diese Aufgabe wird bezüglich des eingangsgenannten Verfahrens erfindungsgemäss durch die kennzeichnenden Merkmale des Patentanspruchs 1 gelöst.

Bezüglich des eingangsgenannten Systems wird diese Aufgabe erfindungsgemäss durch die kennzeichnenden Merkmale des Patentanspruchs 7 gelöst.

Aufgrund der Verwendung einer nach einem Telekommunikationsstandard arbeitenden Übertragungsstrecke zwischen der zentralen Einheit und der Zugbeeinflussungskomponente sind die bisher üblichen Begrenzungen hinsichtlich der Entfernung der Zugbeeinflussungskomponente von der zentralen Einheit aufgehoben worden. Bei dem Einsatz eines optischen Transportnetzes beispielsweise können nahezu beliebige Entfernungen überbrückt werden. Gleichwohl können auch existierende Stellwerkkabel genutzt werden, über die nach dem Telekommunikationsstandard kodierte Signale übertragen werden können. Gleichzeitig wird der für die Zuführung des Datentelegramms benutzte Pfad auch in der entgegengesetzten Richtung zur Übermittlung eines rückgelesenen Datentelegramms, beispielsweise eines MD4-Codes, genutzt, was die erheblich einfachere Abnahme eines Streckenpunktes ermöglicht. Zugleich ist der Signalweg hinsichtlich der Fehleroffenbarung in der gesamten Kette überprüfbar, beispielsweise mittels der OAM-Routinen des Telekommunikationsstandards, was sich zudem in der sofortigen Fehleroffenbarung niederschlägt.

In einer vorteilhaften Ausgestaltung der vorliegenden Erfindung kann der Telekommunikationsstandard eine Datenübertragung nach einem Verfahren vorsehen, welches aus einer Gruppe ausgewählt ist, die aus ISDN, XDSL, SDSL, PLC (Power Line Communication), ATM, GSM, UMTS, Ethernet und IP besteht, und ggfs. Quality of Service-Attribute aufweist. Damit wäre es grundsätzlich sogar möglich, jede Art von ZweiPunkt-Verbindung zwischen der zentralen Einheit und der Zugbeeinflussungskomponente herzustellen. Mit der Verwendung einer Datenübertragung nach einem Telekommunikationsstandard ist es jedoch vorteilhaft möglich, sämtliche OAM-Attribute (Organisation, Administration and Management) auf die verwendeten Komponenten anzuwenden, beispielsweise die Fernwartung eines in der Balise eingebauten ISDN-Modems. Entsprechend sind in einer Weiterbildung der vorliegenden Erfindung in der zentralen Einheit und der Zugbeeinflussungskomponente auf den genutzten Telekommunikationsstandard abgestimmte Komponenten angeordnet, wie z.B. Modems und Netzwerkkarten, wie DSLAM. Diese Anordnung von direkten Kommunikationsmitteln in der Zugbeeinflussungskomponente stellt auch insofern ein Novum dar, als bisher in der Regel immer gleisseitig angeordnete Einheiten, wie beispielsweise von der Siemens Schweiz AG unter den Namen ETM S21®, LEU S21® und MSTT® angeboten, vorgesehen waren, die mit dem Stellwerk und/oder der Leitstelle kommuniziert haben und dann die Zugbeeinflussungskomponente entsprechend mit Daten und Energie versorgt habe bzw. von ihr Informationen abgefragt haben.

In einer weiteren zweckmässigen Ausgestaltung der Erfindung weist die umgeformte Version ein FSK-codiertes Signal mit einer Bitrate von 564 kBit/s auf und entspricht damit dem bisher üblichen Standard für das ETCS-Balisentelegramm. Mit anderen Worten heisst dies beispielsweise für die Rechenmittel auf der Balise, dass diese das Balisentelegramm aus dem Datenstrom von der zentralen Einheit extrahieren und in dieses Format umsetzen müssen. Bei der Nutzung einer ISDN-Übertragungsstrecke muss daher das eigentliche Nutzsignal der ISDN-Datenrate von 64 kbps auf die ETCS-Balisentelegrammrate von 564 kbps umgeformt werden.

Ein weiterer Vorteil bei der Nutzung der Übertragung mittels eines Telekommunikationsstandards besteht darin, dass die im Telekommunikationsstandard vorgesehenen Zwei-Draht-Verbindungen auch eine Leistungsversorgung über diese Verbindung ermöglichen. So kann damit über das Zuleitungskabel eine Phantomspeisung oder eine Fernspeisung erfolgen. Es muss hier weiter hervorgehoben werden, dass besonders bereits bestehende Stellwerkkabel genutzt werden können, um über die Zwei-Draht-Verbindung sowohl Daten auszutauschen als auch elektrische Leistungsversorgung zu bewirken.

Um eine verbesserte Fehleroffenbarung und eine einfachere Abnahme von Streckenpunkten, wie Balise, Loop-Kabel, Linienleitern, realisieren zu können, wird das von der Zugbeeinflussungskomponente ausgesendete Datentelegramm mittels einer Antennenprobe im wesentlichen rückwirkungsfrei an der Zugbeeinflussungskomponente abgegriffen. Die Antennenprobe ermöglicht es so, dass der Zugbeeinflussungskomponente das tatsächlich ausgesendete Signal rückgeführt wird und dort verwertet werden kann. So kann in einer weiteren vorteilhaften Ausgestaltung der Erfindung für das abgegriffene Signal ein MD4-Code berechnet werden, der im umgekehrten Übertragungsweg an die zentrale Einheit übertragen wird. Mit anderen Worten kann somit die zentrale Einheit mit dem von der Zugbeeinflussungskomponente berechneten MD4-Code auf dem umgekehrten Weg zum Up-Link nun auf dem Down-Link-Weg über die gleichen Telekommunikationskomponenten mit dem rückgeführten Antennensignal, d.h. mit dem dieses repräsentierenden MD4-Code, versorgt werden. Mit dem Einstellen eines Signalbegriffs in der zentralen Einheit kann damit simultan der MD4-Code rückübertragen werden und geprüft werden, ob der rückübertragene MD4-Code mit dem projektierten MD4-Code übereinstimmt.

Eine besondere Anforderung an die Flexibilität der Zugsicherungssysteme besteht weiter darin, dass möglicherweise nicht nur im Bereich einer gewissen Übergangszeit verschiedene Systeme oder verschiedene Level eines Systems parallel betrieben werden müssen und/oder beliebig zwischen diesen gewechselt werden können muss. Hierfür ist es besonders zweckmässig, wenn die Zugbeeinflussungskomponente durch eine Unterbrechung der aus der zentralen Einheit kommenden Speisung abgeschaltet wird und vice versa. Mit dem Abschalten kann beispielsweise eine im ETCS-Level 1 betriebene Balise abgeschaltet werden und das Zugsicherungssicherungssystem in eine Rückfallebene des alten Zugsicherungssystems zurückgeschaltet werden. Ebenso kann aber auch das Zugsicherungssystem mit dem Abschalten der Balisen von ETCS Level 1 auf ETCS Level 2 heraufgeschaltet werden oder zugsweise umgeschaltet werden (Mixed Level). Mit dem Einschalten der Balisen kann aus jedem anderen Zugsicherungssystem wieder auf ETCS Level 1 umgeschaltet werden. Damit wird es möglich, das Zugsicherungssystem landesweit auf den entsprechend ausgerüsteten Strecken von einem Zugsicherungssystem in ein anderes resp. einen anderen Level innerhalb sehr kurzer Zeit umzuschalten.

Weitere vorteilhafte Ausgestaltungen der Erfindung können den übrigen Unteransprüchen entnommen werden.

Die Erfindung wird nachfolgend anhand der Zeichnung beispielsweise näher erläutert. Dabei zeigen:
- Figur 1: in schematischer Darstellung eine Anbindung einer Transparent-Balise an ein Stellwerk nach dem Stand der Technik;
- Figur 2: in schematischer Darstellung eine Anbindung einer Transparent-Balise an ein Stellwerk gemäss der vorliegenden Erfindung; und
- Figur 3: in schematischer und detailliertere Darstellung die Anbindung der Transparent-Balise an das Stellwerk gemäss Figur 2.

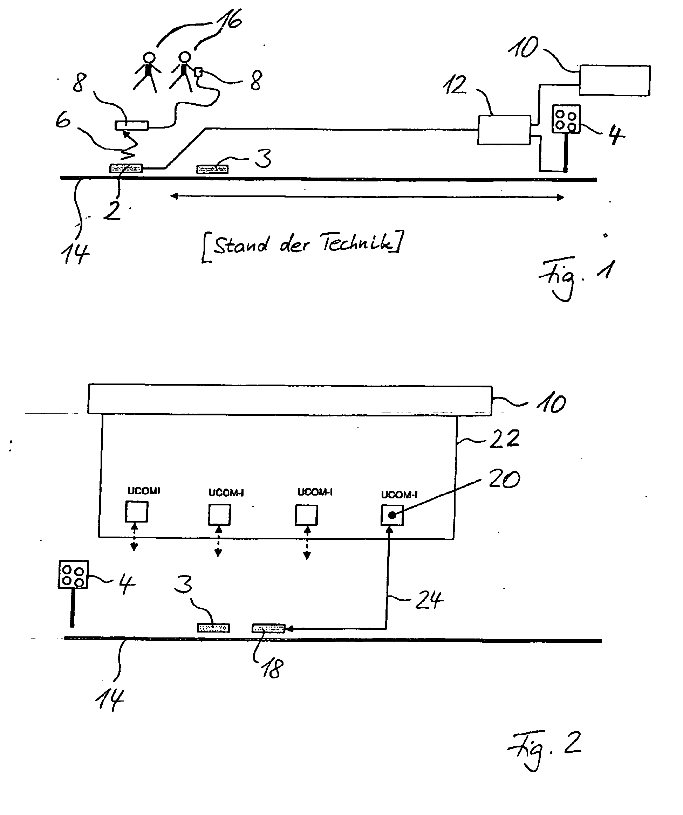

Figur 1 zeigt in schematischer Darstellung eine Anbindung einer Transparent-Balise 2 zur Übertragung von Signalbegriffen eines Eisenbahnsignals 4 auf ein hier nicht weiter dargestelltes Schienenfahrzeug. Die Transparent-Balise 2 überträgt die Signalbegriffe berührungslos über eine Luftschnittstelle 6 auf das Schienenfahrzeug bzw. in diesem Ausführungsbeispiel, welches die Abnahme der Transparent-Balise 2 repräsentieren soll, auf ein Programmier- und Diagnosetool 8. Im Unterschied zu einer ebenfalls eingesetzten Fixdaten-Balise 3, die beispielsweise für die Justierung der Zugposition ihre fixen Positionsdaten nach Empfang eines Tele-Powering-Signals überträgt, kann die Transparent-Balise 2 dynamisch unterschiedliche Signalbegriffe und weitere zuglenkende Informationen übertragen.

Die zu übertragenden Signalbegriffe werden von einem Stellwerk 10 in Abhängigkeit von dem an dem Signal 4 einzustellenden Signalbegriff generiert. Von den Stellwerk 10 werden die Signalbegriffe an eine gleisseitige Einheit 12 gesendet, die wiederum das Signal 4 und die Transparent-Balise 2 steuert und überwacht. Die Distanz dieser Verbindung zwischen der gleisseitigen Einheit 12 und der Transparent-Balise kann bei der Verwendung einer herkömmlich für den Datenaustausch benutzten Schnittstelle (Schnittstelle "C" genannt) etwa 2,5 km nicht überschreiten, was besonders in wenig dicht besiedelten Gebieten eine unverhältnismässig hohe Stellwerkdichte erforderlich macht.

Weiter ist die Abnahme einer derartigen Transparent-Balise 2 vergleichsweise aufwendig, weil eine Strecke 14 für das Auslesen der Projektierungsdaten gesperrt werden muss. Die Streckensperrung ist notwendig, damit Messpersonen 16 an der Strecke 14 mit dem Programmier- und Diagnosetool 8 die Projektierungsdaten für jeden Signalbegriff an der Luftschnittstelle 6 abgreifen und den entsprechenden MD4-Code pro Signalbegriff erfassen können. Hierzu muss jeder Signalbegriff per Funkverbindung vom Stellwerk angefordert, was in der Regel mindestens eine zweite Messperson 16 erforderlich macht. Gleichzeitig stellt die Anwesenheit von Messpersonen 16 an der Strecke 14 trotz aller in der Regel getroffenen Vorsichtsmassnahmen eine erhebliche Gefahr für die Messpersonen 16 dar, weil der Zugverkehr auf parallel verlaufenden Gleisen häufig mit verdoppelter Frequenz (wegen der Sperrung des anderen Gleises) weitergeht. Zur endgültigen Abnahme müssen der projektierte MD4-Code und der erfasste MD4-Code noch verglichen und verifiziert werden.

Figur 2 zeigt nun in schematischer Darstellung eine Anbindung einer Transparent-Balise 18 an das Stellwerk 10 gemäss der vorliegenden Erfindung. Hier wird nun zwischen einer Balisensteuereinheit 20, die in einer Balisenzentrale 22 des Stellwerks 10 angeordnet ist, und der Transparentbalise 18 der Signalbegriff unter Benutzung einer nach einem Telekommunikationsstandard arbeitenden Signalstrecke 24 übertragen. Beispielhaft sei für diese Signalstrecke 24 der ISDN-Standard gewählt. Damit sind für die Länge dieser Signalstrecke 24 erheblich grössere Entfernungen möglich, als dies im Stand der Technik mit den Stellwerkkabeln der Schnittstelle "C" der Fall war.

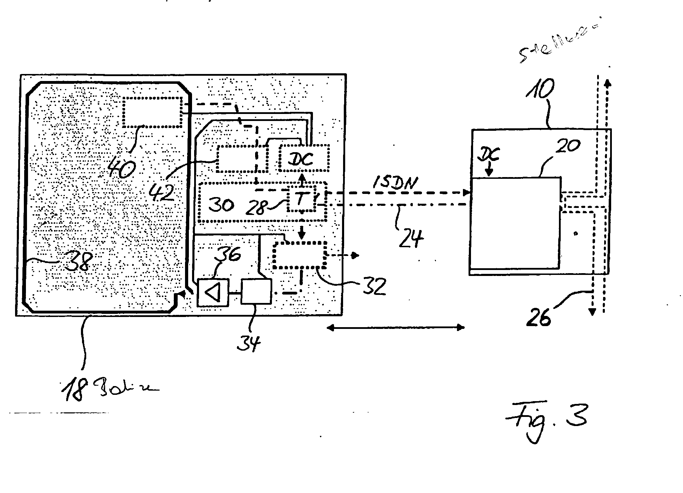

Figur 3 zeigt nun schematisch eine detailliertere Darstellung der Anbindung der Transparent-Balise 18 an das Stellwerk 10. Dabei verfügt das Stellwerk 10 über eine Anbindung an ein Eisenbahndatennetzwerk 26 (beispielsweise über Lichtwellenleiter). Der Signalbegriff wird als Balisentelegramm von der Balisensteuereinheit 20 als nach dem ISDN-Standard aufbereitetes Signal ausgegeben. Über die Signalstrecke 24 erfolgt zugleich eine überlagerte Fernspeisung DC oder AC der Transparent-Balise 18. In der Transparent-Balise 18 wird das Datensignal nun zunächst mit einem T-Glied 28, die als Auskopplungskomponente dient, gefiltert, welches in einem ISDN-Modem 30 angeordnet ist. Anschliessend übernimmt ein Datenextrahierer 32 die Umsetzung des 64 kbps-ISDN-Datensignals auf das standardisierte Schnittstellenformat der Schnittstelle "C" gemäss der "SUBSET 36" der ETCS-Spezifikation. Ein Datentransmitter 34 und ein nachgeschalteter Verstärker 36 dienen dann zur Leistungsverstärkung und zur FSK-Umsetzung (Frequency Shift Keying), damit der Signalbegriff dann als Balisentelegramm mittels eines Sendeloops 38 im Uplink (Interface 'A' nach ETCS) abgestrahlt werden und von dem über die Transparent-Balise 18 fahrenden Schienenfahrzeug gelesen werden kann.

Dieses abgestrahlte Balisentelegramms wird zugleich mit einer Antennenprobe 40 rückwirkungsfrei auf derselben Transparent-Balise 18 empfangen. Ein Coder 42 rechnet den zu diesem im Downlink empfangenen FSK codierten ETCS-Telegramm den zugehörigen MD4-Code aus, welcher auf dem umgekehrten Signalweg von dem ISDN-Modem zur Balisensteuereinheit 20 zurück übertragen und dort auf Fehlerfreiheit analysiert wird.

Zur optischen Unterscheidung dieser beiden Signalwege, also Uplink zu Transparent-Balise 18 und Downlink von der Transparent-Balise 18, wird der Uplink als strichpunktierte Linie und der Downlink als gleichmässig gestrichelte Linie dargestellt. Die gegenüber dem Stand der Technik in der Transparent-Balise 18 neu angeordneten Komponenten sind durch eine feingestrichelte Linie erkennbar.

Mit dieser beispielhaften Ausführungsform können nun mehr Komponenten zur Zugbeeinflussung, wie beispielsweise auch Loop-Kabel und Linienleiter, mit erheblich grösseren Entfernungen vom Stellwerk angeordnet sein, weil die Länge der Übertragungsstrecke im wesentlichen nur noch durch die physikalischen Randbedingungen bestimmt ist, die der Telekommunikationsstandard vorgibt. Die Abnahme von Streckenpunkten, wie der Transparent-Balise 18, wird signifikant wirtschaftlicher, weil mit dem Rücklesen eines Kodes (z.B. MD4, CRC32) für das Balisen-Telegramm ein sicherheitstechnisch einwandfreier und automatisierbarer Weg für das Durchtesten aller von einem Streckenpunkt darzustellende Signalbegriffe besteht. Zudem ist die gesamte Kette der Signalübertragung mit einer sofortiger Ausfalloffenbarung ausgestattet, da die Telekommunikationsmittel in die Zugbeeinflussungkomponente integriert sind und, wie beispielsweise im Fall des ISDN-Modem, fernwartbar und fernabfragbar sind. Mittels der Antennenprobe 40 ist zudem der tatsächliche Signalgehalt auf der Luftschnittstelle 6 überprüfbar, was ebenfalls bei unrichtigem rückgelesenen Code (MD4-Code) eine sofortige Ausfalloffenbarung ergibt. Bei der Abnahme derartiger Streckenpunkte stellt sich weiter eine enorme Kostenersparnis ein, weil der gesamte personelle Aufwand im Gleisbereich (mit der gleichzeitigen Gefährdung der Personen bei Betrieb) vollständig eliminiert werden kann. Die Abnahme nach Streckenanpassungen und Umbauten lässt sich so ebenso wirtschaftlich durchführen.

Ausserdem vereinfacht das erfindungsgemässe Verfahren respektive die erfindungsgemässe Einrichtung auch ein heute sehr dringliches Problem bei dem Übergang von alten, nationalen Zugsicherungssystemen zu ETCS-Systemen und/oder bei bereits ETCS-tauglichen Strecken beim Übergang von einem Level zum höheren oder niedrigen Level. Durch die Abschaltfunktion der Zugbeeinflussungskomponente, d.h. Unterbruch der Speisung auf dem Signalzuführungskabel, kann innerhalb von Sekunden zwischen verschiedenen Rückfallebenen umgeschaltet werden, wodurch beispielsweise auf einem Gleisabschnitt ein Betrieb mit ETCS Level 2, Level 1 bzw. Level 0 mit derselben Hardware erfolgen kann. Es sind somit eine kostengünstige ETCS Level 1-Anbindung an ein bestehendes Bahnnetzwerk (vorhandene Stellwerkkabel) und der Mixed-Level-Betrieb möglich. Eine Bahnstrecke kann so innerhalb von wenigen Sekunden auf den Level 1 hochgefahren werden oder die Rückfallebene von Level 2 auf Level 1 innerhalb von Sekunden betriebsbereit geschaltet werden. Da beispielsweise die von dem Siemens-Konzern gelieferten Balisen eine 4-Draht-Schnittstelle haben, kann z.B. das ISDN-Interface auf den freien zwei Drähten angeschlossen und betrieben werden, was eben den Betrieb der Balise unter dem alten nationalen Zugsicherungsverfahren und den ISDN-Betrieb mit ETCS Level 1 ermöglicht.

## Patentansprüche

1. Verfahren zum Datenaustausch zwischen einer zentralen Einheit (10), insbesondere einem Stellwerk oder einer Leitstelle, und einer Zugbeeinflussungskomponente (18), insbesondere einer Balise, einem Loop-Kabel oder einem Linienleiter, bei dem:
a) ein einem von der Zugbeeinflussungskomponente (18) auszusendenden Datentelegramm entsprechender Datensatz von der zentralen Einheit (10) für eine Übertragung zur Zugbeeinflussungskomponente (18) in ein nach einem Telekommunikationsstandard (24) übertragbaren Datensatz kodiert wird;
b) der so kodierte Datensatz an die Zugbeeinflussungskomponente (18) über ein Zuleitungskabel (24) oder eine Luftschnittstelle übertragen wird;
c) aus dem kodierten Datensatz in der Zugbeeinflussungskomponente (18) ein dem Datentelegramm entsprechender Datensatz extrahiert und in eine zur Aussendung erforderliche Version des Datentelegramms umgeformt wird;
d) das Datentelegramm von der Zugbeeinflussungskomponente (18) ausgesendet wird;
**dadurch gekennzeichnet, dass**
e) das von der Zugbeeinflussungskomponente (18) ausgesendete Datentelegramm mittels einer Antennenprobe (40) im wesentlichen rückwirkungsfrei an der Zugbeeinflussungskomponente (18) abgegriffen wird, wobei für das abgegriffene Signal ein rückzulesendes Datentelegramm erzeugt wird, das im umgekehrten Übertragungsweg (24) an die zentrale Einheit (10) übertragen wird.

2. Verfahren nach Anspruch 1,
**dadurch gekennzeichnet, dass**
der Telekommunikationsstandard eine Datenübertragung nach einem bidirektionalen Daten-Verfahren vorsieht.

3. Verfahren nach Anspruch 2,
**dadurch gekennzeichnet, dass**
in der zentralen Einheit (10) und der Zugbeeinflussungskomponente (18) auf den genutzten Telekommunikationsstandard (24) abgestimmte Komponenten (30) angeordnet sind.

4. Verfahren nach einem der Ansprüche 1 bis 3,
**dadurch gekennzeichnet, dass**
die umgeformte Version ein FSK-codiertes Signal mit einer Bitrate von 564 kBit/s aufweist.

5. Verfahren nach einem der Ansprüche 1 bis 4,
**dadurch gekennzeichnet, dass**
über das Zuleitungskabel (24) eine Phantomspeisung oder eine Fernspeisung (DC) erfolgt.

6. Verfahren nach einem der Ansprüche 1 bis 5,
**dadurch gekennzeichnet, dass**
die Zugbeeinflussungskomponente (18) durch eine Unterbrechung der aus der zentralen Einheit (10) kommenden Speisung (DC) abgeschaltet wird und vice versa.

7. System zum Datenaustausch zwischen einer zentralen Einheit (10), insbesondere einem Stellwerk oder einer Leitstelle, und einer Zugbeeinflussungskomponente (18), insbesondere einer Balise, einem Loop-Kabel oder einem Linienleiter, umfassend:
a) der zentralen Einheit (10) zugeordnete Rechenmittel (20, 22), um einen Datensatz, der einem von der Zugbeeinflussungskomponente (18) auszusendenden Datentelegramm entspricht, für eine Übertragung des Datensatzes von der zentralen Einheit (10) zur Zugbeeinflussungskomponente (18) in ein nach einem Telekommunikationsstandard (24) übertragbaren Datensatz zu kodieren;
b) der zentralen Einheit (10) zugeordnete Übertragungsmittel (20), um den so kodierten Datensatz über ein Zuleitungskabel (24) oder eine Luftschnittstelle an die Zugbeeinflussungskomponente (18) zu übertragen;
c) der Zugbeeinflussungskomponente (18) zugeordnete Rechenmittel (32, 34), um aus dem kodierten Datensatz in der Zugbeeinflussungskomponente (18) einen dem Datentelegramm entsprechenden Datensatz zu extrahieren und in eine zur Aussendung erforderliche Version des Datentelegramms umzuformen;
d) der Zugbeeinflussungskomponente zugeordnete Übertragungsmittel (36, 38), um das Datentelegramm von der Zugbeeinflussungskomponente (18) auszusenden;
**dadurch gekennzeichnet, dass**
e) das von der Zugbeeinflussungskomponente (18) ausgesendete Datentelegramm mittels einer Antennenprobe (40) im wesentlichen rückwirkungsfrei an der Zugbeeinflussungskomponente (18) zeitgleich abgreifbar ist und mit dem der Zugbeeinflussungseinheit (18) zugeordneten Rechenmittel (42) für das abgegriffene Signal ein rückzulesendes Datentelegramm erzeugbar ist, das auf dem umgekehrten Übertragungsweg (24) an die zentrale Einheit (10) übertragbar ist.

8. System nach Anspruch 7,
**dadurch gekennzeichnet, dass**
der Telekommunikationsstandard eine Datenübertragung nach einem Verfahren vorsieht, welches aus einer Gruppe ausgewählt ist, die aus ISDN, XDSL, SDSL, PLC, ATM, GSM, UMTS, Ethernet und JP bestcht.

9. System nach Anspruch 8,
**dadurch gekennzeichnet, dass**
in der zentralen Einheit (10) und der Zugbeeinflussungskomponente (18) auf den genutzten Telekommunikationsstandard (24) abgestimmte Sende- und/oder Empfangskomponenten (30) angeordnet sind.

10. System nach einem der Ansprüche 7 bis 9,
**dadurch gekennzeichnet, dass**
die umgeformte Version des Datentelegramm ein FSK-codiertes Signal mit einer Bitrate von 564 kBit/s aufweist.

11. System nach einem der Ansprüche 7 bis 10,
**dadurch gekennzeichnet, dass**
über das Zuleitungskabel (24) eine Phantomspeisung oder eine überlagerte Fernspeisung (DC, AC) erfolgt.

12. System nach einem der Ansprüche 7 bis 11,
**dadurch gekennzeichnet, dass**
das Schaltmittel vorgesehen sind, um die Zugbeeinflussungskomponente durch eine Unterbrechung der aus der zentralen Einheit kommenden Speisung signaltechnisch sicher abzuschalten und vice versa.

## Claims

1. Method for data exchange between a central unit (10), in particular a signal box or a railway control centre, and a train influencing component (18), in particular a balise, a loop cable or a track conductor, wherein:
a) a data record corresponding to a data telegram to be transmitted by the train influencing component (18) is coded by the central unit (10) for a transmission to the train influencing component (18) into a data record which can be transmitted in accordance with a telecommunications standard (24);
b) the thus coded data record is transmitted to the train influencing component (18) by way of a feed cable (24) or a radio interface;
c) a data record corresponding to the data telegram is extracted from the coded data record in the train influencing component (18) and converted into a version of the data telegram which is required for transmission;
d) the data telegram is transmitted by the train influencing component (18);
**characterised in that**
e) the data telegram transmitted by the train influencing component (18) is tapped essentially free of feedback at the train influencing component (18) by means of an antenna probe (40), with a data telegram which is to be read back being generated for the tapped signal and transmitted to the central unit (10) over the reverse transmission path (24).

2. Method according to claim 1,
**characterised in that**
the telecommunications standard makes provision for a data transmission in accordance with a bidirectional data method.

3. Method according to claim 2,
**characterised in that**
components (30) conforming to the telecommunications standard (24) used are arranged in the central unit (10) and the train influencing component (18).

4. Method according to one of claims 1 to 3,
**characterised in that**
the converted version contains an FSK-encoded signal at a bit rate of 564 kbps.

5. Method according to one of claims 1 to 4,
**characterised in that**
a phantom power feed or a remote power feed (DC) is effected by way of the feed cable (24).

6. Method according to one of claims 1 to 5,
**characterised in that**
the train influencing component (18) is switched off by means of an interruption of the power feed (DC) coming from the central unit (10), and vice versa.

7. System for data exchange between a central unit (10), in particular a signal box or a railway control centre, and a train influencing component (18), in particular a balise, a loop cable or a track conductor, comprising:
a) computing means (20, 22) associated with the central unit (10) for the purpose of coding a data record corresponding to a data telegram to be transmitted by the train influencing component (18) for a transmission of the data record from the central unit (10) to the train influencing component (18) into a data record which can be transmitted in accordance with a telecommunications standard (24);
b) transmission means (20) associated with the central unit (10) for the purpose of transmitting the thus coded data record by way of a feed cable (24) or a radio interface to the train influencing component (18);
c) computing means (32, 34) associated with the train influencing component (18) for the purpose of extracting a data record corresponding to the data telegram from the coded data record in the train influencing component (18) and converting it into a version of the data telegram which is required for transmission;
d) transmission means (36, 38) associated with the train influencing component for the purpose of transmitting the data telegram from the train influencing component (18);
**characterised in that**
e) the data telegram transmitted by the train influencing component (18) can simultaneously be tapped essentially free of feedback at the train influencing component (18) by means of an antenna probe (40) and a data telegram which is to be read back can be generated for the tapped signal by the computing means (42) associated with the train influencing unit (18) and said data telegram can be transmitted to the central unit (10) over the reverse transmission path (24).

8. System according to claim 7,
**characterised in that**
the telecommunications standard makes provision for a data transmission in accordance with a method which is chosen from a group consisting of ISDN, XDSL, SDSL, PLC, ATM, GSM, UMTS, Ethernet and IP.

9. System according to claim 8,
**characterised in that**
transmit and/or receive components (30) conforming to the telecommunications standard (24) used are arranged in the central unit (10) and the train influencing component (18).

10. System according to one of claims 7 to 9,
**characterised in that**
the converted version of the data telegram contains an FSK-encoded signal at a bit rate of 564 kbps.

11. System according to one of claims 7 to 10,
**characterised in that**
a phantom power feed or a superimposed remote power feed (DC, AC) is effected by way of the feed cable (24).

12. System according to one of claims 7 to 11,
**characterised in that**
switching means are provided for the purpose of safely switching off the train influencing component in terms of signalling by means of an interruption of the power feed coming from the central unit, and vice versa.

## Revendications

1. Procédé d'échange de données entre une unité ( 10 ) centrale, notamment un poste d'aiguillage ou un poste de conduite, et un composant ( 18 ) de commande de train, notamment une balise, un câble-loop ou un conducteur de ligne, dans lequel :
a) on code un jeu de données, correspondant à un télégramme de données à émettre par le composant ( 18 ) de commande de train, par l'unité ( 10 ) centrale pour une transmission au composant ( 18 ) de commande de train en un jeu de données pouvant être transmis par une norme ( 24 ) de télécommunication ;
b) on transmet le jeu de données ainsi codé au composant ( 18 ) de commande de train par un câble ( 24 ) d'entrée ou par une interface radio ;
c) du jeu de données codé dans le composant ( 18 ) de commande de train, on extrait un jeu de données, correspondant au télégramme de données et on le transforme en une version du télégramme de données nécessaire pour l'émission ;
d) le télégramme de données est émis par le composant ( 18 ) de commande de train ;
**caractérisé en ce que**
e) le télégramme de données émis par le composant ( 18 ) de commande de train est, au moyen d'une prise ( 40 ) d'antenne, prélevé sensiblement sans réaction sur le composant ( 18 ) de commande de train, un télégramme de données à lire en retour, qui est transmis dans la voie ( 24 ) de transmission en sens contraire à l'unité ( 10 ) centrale, étant produit pour le signal prélevé.

2. Procédé suivant la revendication 1,
**caractérisé en ce que**
la norme de télécommunication prévoit une transmission de données suivant un procédé de données bidirectionnel.

3. Procédé suivant la revendication 2,
**caractérisé en ce que**
dans l'unité ( 10 ) centrale et dans le composant ( 18 ) de commande de train sont disposés des composants ( 30 ) adaptés à la norme ( 24 ) de télécommunication utilisée.

4. Procédé suivant l'une des revendications 1 à 3,
**caractérisé en ce que**
la version transformée comporte un signal codé FSK à un débit binaire de 564 Kbit/s.

5. Procédé suivant l'une des revendications 1 à 4,
**caractérisé en ce que**
une alimentation fantôme ou une télé-alimentation ( DC ) s'effectue par le câble ( 24 ) d'entrée.

6. Procédé suivant l'une des revendications 1 à 5,
**caractérisé en ce que**
le composant ( 18 ) de commande de train est mis hors circuit et vice versa par une interruption de l'alimentation ( DC ) arrivant de l'unité ( 10 ) centrale.

7. Système d'échange de données entre une unité ( 10 ) centrale, notamment un poste d'aiguille ou un poste de conduite, et un composant ( 18 ) de commande de train, notamment une balise, un câble-loop ou un conducteur de ligne, comprenant :
a) des moyens ( 20, 22 ) informatiques associés à l'unité ( 10 ) centrale pour coder un jeu de données, qui correspond à un télégramme de données à émettre par un composant ( 18 ) de commande de train, en un jeu de données pouvant être transmis suivant une norme ( 24 ) de télécommunication pour une transmission du jeu de données de l'unité ( 10 ) centrale au composant ( 18 ) de commande de train ;
b) des moyens ( 20 ) de transmission associés à l'unité ( 10 ) centrale pour transmettre le jeu de données ainsi codé au composant ( 18 ) de commande de train par un câble ( 24 ) d'entrée ou par une interface radio ;
c) des moyens ( 32, 34 ) informatiques associés au composant ( 18 ) de commande de train pour extraire, du jeu de données codé dans le composant ( 18 ) de commande de train, un jeu de données correspondant au télégramme de données et le transformer en une version du télégramme de données nécessaire pour l'émission ;
d) des moyens ( 36, 38 ) informatiques associés au composant ( 18 ) de commande de train pour émettre le télégramme de données par le composant ( 18 ) de commande de train ;
**caractérisé en ce que**
e) le télégramme de données émis par le composant ( 18 ) de commande de train peut, au moyen d'une prise ( 40 ) d'antenne, être prélevé, de manière isochrone et sensiblement sans réaction, sur le composant ( 18 ) de commande de train et il peut être produit par les moyens ( 42 ) informatiques associés au composant ( 18 ) de commande de train pour le signal prélevé un télégramme de données à lire en retour, qui peut être transmis à l'unité ( 10 ) centrale par la voie ( 24 ) de transmission en sens contraire.

8. Système suivant la revendication 7,
**caractérisé en ce que**
la norme de télécommunication prévoit une transmission de données par un procédé qui est choisi dans un groupe constitué de ISDN, XDSL, PLC, ATM, GSM, UMTS, Ethernet et IP.

9. Système suivant la revendication 8,
**caractérisé en ce que**
dans l'unité ( 10 ) centrale et dans le composant ( 18 ) de commande de train sont disposés des composants ( 30 ) adaptés à la norme ( 24 ) de télécommunication utilisées.

10. Système suivant l'une des revendications 7 à 9,
**caractérisé en ce que**
la version transformée comporte un signal codé FSK à un débit binaire de 564 Kbit/s.

11. Système suivant l'une des revendications 7 à 10,
**caractérisé en ce que**
une alimentation fantôme ou une télé-alimentation ( DC ) s'effectue par le câble ( 24 ) d'entrée.

12. Système suivant l'une des revendications 7 à 11,
**caractérisé en ce qu'**il est prévu des moyens de commutation pour mettre hors circuit, d'une manière sûre en technique du signal, et vice versa, le composant de commande de train par une interruption de l'alimentation arrivant de l'unité centrale.
